(19) **Europäisches Patentamt / European Patent Office / Office européen des brevets**

(11) **EP 4 522 852 B1**

(12) **EUROPEAN PATENT SPECIFICATION**

(45) Date of publication and mention
of the grant of the patent:
**24.06.2026 Bulletin 2026/26**

(21) Application number: **23729164.6**

(22) Date of filing: **04.05.2023**

(51) International Patent Classification (IPC):
$F02D\ 13/02$ (2006.01)  $F02B\ 31/08$ (2006.01)
$F02D\ 19/02$ (2006.01)  $F02D\ 41/00$ (2006.01)
$F02M\ 21/02$ (2006.01)  $F01L\ 1/26$ (2006.01)
$F01L\ 1/053$ (2006.01)  $F01L\ 1/08$ (2006.01)
$F01L\ 13/00$ (2006.01)

(52) Cooperative Patent Classification (CPC):
F01L 1/053; F01L 1/08; F01L 1/26; F01L 1/267;
F01L 13/0015; F02B 31/085; F02D 13/0207;
F02D 13/0257; F02D 19/024; F02D 41/0027;
F02M 21/0206; F01L 2800/19; F01L 2810/01;
F02D 13/0253; F02D 2041/001;          (Cont.)

(86) International application number:
**PCT/IB2023/054640**

(87) International publication number:
**WO 2023/218294 (16.11.2023 Gazette 2023/46)**

(54) **INTERNAL-COMBUSTION ENGINE SUPPLIED WITH GASEOUS FUEL, AND METHOD FOR CONTROL THEREOF**

MIT GASFÖRMIGEM BRENNSTOFF GESPEISTE BRENNKRAFTMASCHINE UND VERFAHREN ZU IHRER STEUERUNG

MOTEUR À COMBUSTION INTERNE ALIMENTÉ EN CARBURANT GAZEUX ET SON PROCÉDÉ DE COMMANDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.05.2022 IT 202200009704**

(43) Date of publication of application:
**19.03.2025 Bulletin 2025/12**

(73) Proprietor: **C.R.F. Società Consortile per Azioni**
**10043 Orbassano (Torino) (IT)**

(72) Inventors:
• **RICCO, Raffaele**
**10043 Orbassano (Torino) (IT)**

• **MAZZARELLA, Carlo**
**10043 Orbassano (Torino) (IT)**
• **GARGANO, Marcello**
**10043 Orbassano (Torino) (IT)**
• **ALTAMURA, Chiara**
**10043 Orbassano (Torino) (IT)**
• **STUCCHI, Sergio**
**10043 Orbassano (Torino) (IT)**

(74) Representative: **Buzzi, Notaro & Antonielli d'Oulx S.p.A.**
**Corso Vittorio Emanuele II, 6**
**10123 Torino (IT)**

(56) References cited:
FR-A1- 3 064 676     US-A1- 2012 023 935
US-A1- 2012 160 213

(52) Cooperative Patent Classification (CPC): (Cont.)
F02D 2041/0015; Y02T 10/30

**Description**

Field of the invention

The present invention relates to internal-combustion engines supplied with a gaseous fuel.

In particular, the invention regards an internal-combustion engine, supplied with gaseous fuel, of the type comprising one or more cylinders and respective pistons that slide in the cylinders between a top dead centre (TDC) and a bottom dead centre (BDC) and are operatively connected to a crankshaft, the engine being configured for actuating subsequent stages of intake, compression, expansion, and exhaust during each operating cycle in each cylinder, wherein the engine comprises, for each cylinder:

- a first intake duct and a second intake duct opening into the cylinder and both communicating with a same intake manifold, so as to receive air at a same pressure;
- a first intake valve and a second intake valve associated to the cylinder for controlling entering into the cylinder of a flow of intake air, respectively from the first intake duct and from the second intake duct, during each operating cycle of the cylinder;
- an actuation device for actuating said first intake valve and said second intake valve so as to control, during each operating cycle of the cylinder, an opening movement and a subsequent closing movement of said first intake valve and said second intake valve; and
- a system for supplying gaseous fuel that comprises at least one injector associated to each cylinder, configured and arranged for injecting gaseous fuel directly into the respective cylinder during each operating cycle of the cylinder.

Prior art

In engines of the type referred to above, there exists the problem of preventing backfiring phenomena in the intake ducts and knocking and/or pre-ignition phenomena in the combustion chamber.

A known solution to the above problem consists in cooling the exhaust gases that have remained in the cylinder using non-combustible gases (fresh air) at the start of the intake stage. In this way, the fuel mixture is prevented from being in a high-temperature environment.

Another method for eliminating backfiring consists in direct injection (DI) of the gaseous fuel into the combustion chamber instead of injection of gaseous fuel into an intake duct, the so-called port fuel injection (PFI). However, in the case of ultra-lean combustion, which may be useful for increasing thermal efficiency, both in the case of PFI and in the case of DI, there may occur a misfiring phenomenon, with consequent backfiring.

In the case where the gaseous fuel is hydrogen, it should moreover be considered that the minimum energy of ignition is approximately ten times less than that of petrol. This characteristic, together with the tendency of hydrogen to burn within ample limits of inflammability and with high diffusiveness, causes a drastic increase in the risk of backfiring in the intake ducts. The countermeasures that are normally effective for petrol-fueled engines or natural-gas-fuelled engines may hence prove ineffective in the case, instead, of an engine supplied with hydrogen.

Moreover, hydrogen-fueled engines need to operate with ultra-lean mixture to prevent NOx emissions and knocking phenomena (due to the low ignition energy of hydrogen). The combustion of a lean mixture is in general slower, which means that there may still be an amount of air and unburnt fuel in the cylinder when the intake valves open, which leads to backfiring. Moreover, for engines that work in the presence of ultra-lean mixtures, in general the compression ratio is increased to favour ignition and complete combustion: however, high compression ratios entail a significant reduction in the turbulent kinetic energy at top dead centre, during start of combustion, with consequent increase in the risk of slow and incomplete combustion.

An attempt to solve this problem has been proposed in document US 7,980, 220 B2. In this known solution an engine is provided of the type referred to above, with two intake ducts and two respective intake valves for each cylinder. The injection of hydrogen is performed only in one of the two intake ducts. At least at higher engine loads and r.p.m., the intake valve that controls the intake duct into which hydrogen is injected is opened, during each operating cycle of the cylinder, with a delay with respect to the other intake valve. In this way, in the step in which only the intake valve of the intake duct to which the injector is not associated is open, only fresh air enters the combustion chamber. In theory, the above solution should eliminate the risk of backfiring, thanks to the cooling obtained with the fresh air introduced in the first part of the intake stage. However, a solution of the latter type is not fully satisfactory, for the reason that the cooling mentioned above is obtained only during a first part of the intake stage. Moreover, the swirl initially generated could induce the flow of air and hydrogen introduced by opening the second valve to impact precisely on the hot exhaust valves with the risk of backfiring, i.e., undesired ignition of the fuel during the intake stage.

Document US 2012/023935 A1 describes a conventional internal-combustion engine, supplied with liquid fuel, in which the two intake ducts of each cylinder are supplied with flows of air having different temperatures and pressures.

US 2012/160213 A1 discloses an internal combustion engine with two independently operated intake valves per cylinder, each connected to separate intake ports. A fuel injector supplies gaseous fuel into one intake port, enabling stratified charge formation. The timing of valve openings can be varied, and the system aims to optimise air/fuel mixture and combustion efficiency. The document does not teach the median timing of the intake valves and the direct injection of gaseous fuel into the cylinder.

Object of the invention

The object of the present invention is to provide an internal-combustion engine supplied with gaseous fuel in which the risk of backfiring is drastically reduced.

A further object is to provide an internal-combustion engine supplied with gaseous fuel, in particular hydrogen, in which also the risk of knocking and pre-ignition (the so-called mega-knock phenomenon) is drastically reduced.

In particular, the object of the invention is to provide an internal-combustion engine supplied with gaseous fuel that will be able to obtain effective cooling of the hot spots in the combustion chamber so as to prevent undesired ignition of the fuel during opening of the intake valve or valves, i.e., prevent phenomena of backfiring or irregular ignition.

Moreover, a further object of the invention is to provide an internal-combustion engine supplied with gaseous fuel in which NOx emissions will be considerably reduced, also providing the possibility of operating with ultra-lean mixture (i.e., with a value of the ratio between the air/fuel ratio and the stoichiometric ratio higher than a threshold, for example 1.8), exploiting an increase in the turbulent kinetic energy in the cylinder, with consequent greater homogeneity of the air/fuel mixture.

Summary of the invention

With a view to achieving one or more of the aforesaid objects, the subject of the invention is an internal-combustion engine supplied with gaseous fuel and having the features of claim 1.

In particular, if for example the fuel injector is in a coaxial position with respect to the cylinder, thanks to the intense motion of swirl, the fuel will remain confined in the proximity of the nozzle of the injector, thus reducing the risk of giving rise to irregular ignition in so far as it will not come into contact with the hot spots of the combustion chamber that are located in the area of the exhaust valves. The subsequent and late opening of the second intake valve brings about mixing of the charge of fuel with the air in the cylinder in such a way as to guarantee the homogeneity necessary to prevent formation of NOx.

Thanks to the characteristics referred to above, for the entire phase of opening of the first intake valve, the cylinder receives only fresh air. The motion of swirl of the flow of air introduced into the cylinder during opening of the first intake valve has a marked positive effect on cooling of the hot spots of the combustion chamber, thus reducing the knocking tendency. Reduction in the risk of knocking enables operation with a higher compression ratio, which provides a benefit in terms of thermal efficiency referred to.

Fuel injection, in particular with the injector in a central position, takes place after closing of the first valve, and this prevents the fuel from reaching the hot spots of the combustion chamber, in turn preventing any undesired ignition and backfiring.

Opening in successive steps of the first intake valve and the second intake valve causes a combination of movements of swirl and tumble of the flow of air, which, in addition to guaranteeing a perfect mixing of the fuel injected with the air, reduces the risk of a reflux of the gaseous fuel into the supply ducts, with consequent reduction in the risk of backfiring.

In particular, the motion of swirl, which can be modulated as a function of the engine operating point, at the end of the intake stage, thanks to opening in separate and successive steps of the two intake valves, has important effects on the homogeneity of the air/fuel mixture, with consequent reduction in NOx emissions, and on the reduction in thermal losses during combustion (instead a swirl that is too marked increases thermal losses on account of the contact of the flow with the wall of the combustion chamber).

Studies and experiments conducted by the present applicant have shown that opening at subsequent times of the two intake valves of each cylinder of the engine, interspersed by fuel injection, in general enables:

-    cooling of the hot spots of the combustion chamber so as to prevent phenomena of backfiring and undesired ignition; and

-    modulation of the intensity of the organized macro-motions inside the combustion chamber, i.e., the so-called motions of swirl (flow rotating about the axis of the cylinder), tumble (flow rotating about an axis orthogonal to the axis of the cylinder), and cross-tumble (flow rotating about an axis orthogonal to the axis of the cylinder and orthogonal to the axis of tumble), so as to favour the homogeneity of the charge. The aforesaid advantages derive from the fact that the two intake ducts give out into the cylinder in directions tangential with respect to the axis of the cylinder. In the initial step of the intake stroke, which starts when the piston is approximately at TDC, only the first intake valve is opened. The flow of air introduced into the cylinder through the first intake duct generates a fluid-dynamic field including a component of swirl, in addition to components of tumble and cross-tumble. When, after closing of the first intake valve, the second intake valve is opened, a dual effect is obtained:

- 1) A field of motion is generated that counters the component of the field of motion of the swirl generated by opening of the first intake valve so that the pre-existing swirl is attenuated or even reversed in its direction of rotation. In addition, the swirl generated by opening of the first valve also turns into tumble and cross-tumble, which favour mixing of the injected fuel with the air, so as to have a homogeneous mixture during combustion and prevent formation of NOx or any irregular combustion. This phenomenon is particularly desirable at higher engine loads both because the risk of irregular ignition is higher (higher temperature of the walls of the combustion chamber) and because it is more difficult to guarantee homogeneity of the mixture on account of the greater amount of fuel.
- 2) Furthermore, opening of just the second intake valve after closing of the first intake valve generates a fresh amount of turbulence, which, albeit dissipating, causes at TDC the total content of turbulent kinetic energy to be higher than in the case of simultaneous conventional actuation of the intake valves. Dissipation of the turbulence is proportional to the cube of the intensity of the turbulence itself: generating a lot of turbulence at the start of the intake stage leads to a significant dissipation of the latter. A delayed generation of new turbulence enables increase in the amount thereof at the ignition angle. Ideally it may be possible to double the turbulent kinetic energy available at the ignition angle as compared to the case of conventional actuation of the intake valves, with evident benefits on greater stability of combustion and hence on the possibility of increasing, for example, dilution of the charge. In particular, the greater turbulence is desirable in the presence of ultra-lean combustion.

In an example, the system for supplying gaseous fuel is configured for completing supply of gaseous fuel, during each operating cycle of the cylinder, before the second intake valve is opened. In a further example, the system for supplying gaseous fuel is configured for completing supply of gaseous fuel, during each operating cycle of the cylinder, after the second intake valve has been opened. During each operating cycle of the cylinder, the supply of gaseous fuel may be performed via a single injection or via multiple injections.

In one embodiment, the engine comprises an actuation device for variable actuation of the first intake valve and the second intake valve, which is configured to obtain, in different engine operating conditions, a first operating mode with opening at successive times firstly of only the first intake valve and then of only the second intake valve, or a second operating mode with opening of the first intake valve and the second intake valve at crank angles which are identical or relatively close to one another and closing of the first intake valve and the second intake valve at crank angles that are identical or relatively close to one another, or else a third operating mode, with opening and closing of only the second intake valve.

The device for variable actuation of the intake valves may be an electronically controlled hydraulic actuation device, or a device with electromagnetic or electro-pneumatic actuators, or a device including actuating cams having different profiles which are selectively activatable.

Yet a further object of the invention is the engine-control method described above.

Further advantageous characteristics of the invention are indicated in the annexed claims.

Detailed description of the invention

Further characteristics and advantages of the invention will emerge from the ensuing description with reference to the annexed drawings, which are provided purely by way of non-limiting example and in which:

Figures 1 and 2 are a perspective view and a top plan view of the combustion chamber of a cylinder of an internal-combustion engine according to the invention;
Figure 3 is a perspective view of a system of a conventional type for actuation of the intake valves associated to a cylinder of a conventional internal-combustion engine;
Figure 3A illustrates a variant of Figure 3 corresponding to an example of embodiment of the engine according to the invention;
Figures 4-6 are diagrams that illustrate various examples of opening and closing cycles of the two intake valves associated to a cylinder of the engine according to the invention, compared with a conventional cycle;
Figures 7-11 are diagrams that illustrate the advantages of the present invention; and
Figure 12 is a diagram of a system for variable actuation of the intake valves of a known type developed by the present applicant and marketed under the trademark MultiAir, which can be used in an embodiment of the invention.

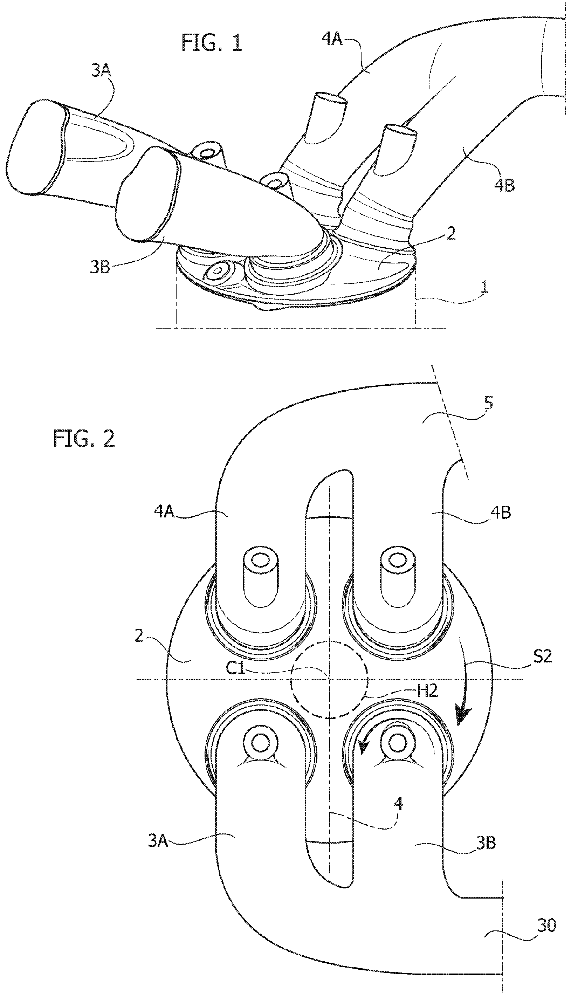

With reference to Figures 1 and 2, the reference number 2 designates as a whole the combustion chamber associated to a cylinder 1 of a hydrogen-supplied internal-combustion engine according to the invention.

Figures 1 and 2 show two intake ducts 3A, 3B, which give out into the combustion chamber 2 and are shaped and arranged according to any known technique in such a way as to introduce respective flows of air into the cylinder, in directions set at a distance from the axis C1 of the cylinder. The two ducts 3A, 3B are both in communication with one and the same intake manifold 30 (illustrated only partially) and consequently receive air at the same pressure from the line for supply of air to the engine. Figures 1 and 2 also show two exhaust ducts 4A, 4B associated to the cylinder 1 and converging into an exhaust manifold 5 (partially visible in Figure 2) of the internal-combustion engine.

The engine according to the invention is provided with a hydrogen-supply system of any known type. The hydrogen-supply system comprises a hydrogen injector H2 for each cylinder, illustrated in Figure 2, which is arranged and configured for supplying hydrogen directly into the cylinder. The injector H2 is illustrated only schematically in Figure 2 in so far as it can be produced according to any known technique. Illustrated in the drawings are only the parts that have relevance for the purposes of the present invention, it being understood that the structure and general configuration of the engine may likewise be obtained in any known way. In particular, the drawings do not show the spark plug associated to the combustion chamber 2.

Associated to the two intake ducts 3A, 3B are two intake valves of the conventional mushroom type, with a stem and a circular head: a first intake valve VA and a second intake valve VB.

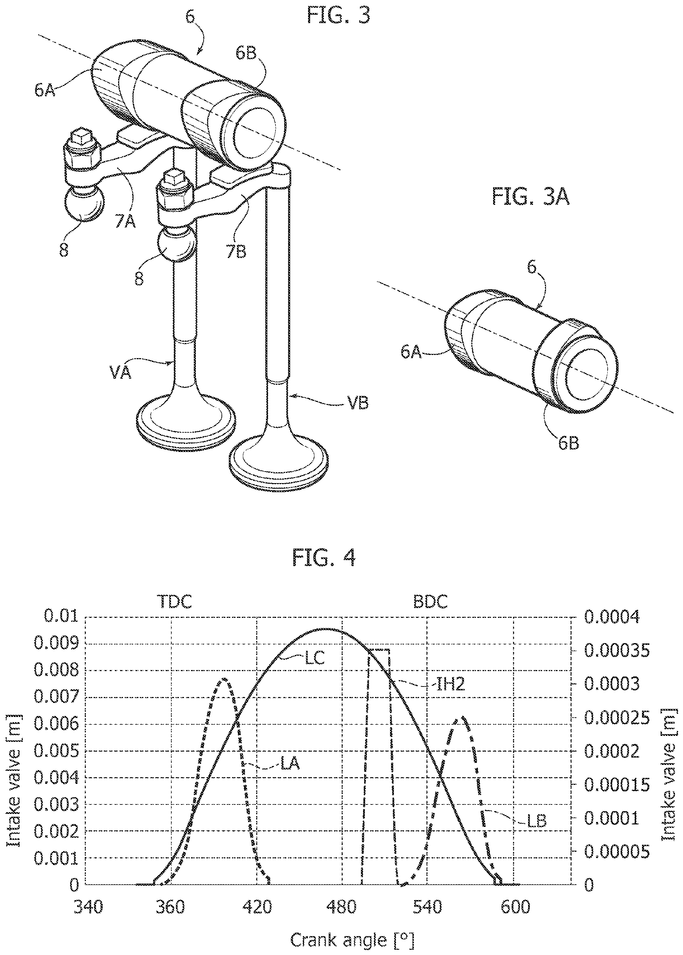

As will be illustrated further also in what follows, for the purposes of the present invention, the system for actuation of the intake valves VA, VB may be of any known type. Figure 3 shows a device for actuation of the intake valves VA, VB of the conventional type comprising a camshaft 6 supported in a rotatable way in the structure of the cylinder head of the engine and controlled in rotation, in a conventional way, by means of a transmission device (for example, a cogged-belt transmission device) by the crankshaft (not illustrated) of the internal-combustion engine. The camshaft 6, only a portion of which is illustrated in Figure 3, comprises two cams 6A, 6B for actuation of the first intake valve VA and the second intake valve VB, respectively. In the conventional example illustrated in Figure 3, the two cams 6A, 6B actuate the two valves VA, VB by means of respective rockers 7A, 7B each of which has one end mounted in an oscillating way on a support 8 carried by the structure of the cylinder head and the opposite end acting on the respective intake valve.

In the case of a first embodiment of the invention, the cams 6A, 6B are modified in the way illustrated in Figure 3A in order to obtain valve-lift profiles of the type illustrated in any of Figures 4-6.

Figure 4 shows the valve-lift profiles of the two intake valves VA, VB according to a first example of embodiment of the present invention. The diagram of Figure 4 shows the displacement of each intake valve as a function of the angle of rotation of the engine. According to the convention adopted here, an angle of rotation of the engine equal to 360° corresponds to the condition in which the piston inside the cylinder is at TDC. The position of the piston at BDC corresponds to an crank angle of 540°.

In Figure 4, the line LC represents the valve-lift diagram of the intake valves in the case of a conventional engine, provided with conventional cams. In the case of the conventional solution, the two intake valves VA, VB are controled simultaneously and synchronously according to the profile LC. As may be seen, in the conventional solution, the two valves start to open immediately before TDC, reach the condition of maximum opening around an crank angle close to 470° and are again closed in the proximity of an crank angle of 600°. To obtain this result, the two cams 6A, 6B have an identical profile, such as to generate the valve-lift profile LC, and also have an identical angular position on the camshaft 6, as may be seen in Figure 3.

In the example of embodiment of the invention that is illustrated in Figure 4, the cams 6A, 6B have configurations that are different from one another (as in Figure 3A) and are oriented angularly in a different way on the camshaft 6. The conformation and orientation of the two cams 6A, 6B is such as to produce for the intake valves VA, VB the valve-lift profiles denoted, respectively, by LA and LB in Figure 4 (it should be noted that the valve-lift profiles LA and LB appearing in Figure 4 *et seq.* are merely qualitative).

The first important characteristic to be noted is that, during each operating cycle of the cylinder, first a movement of opening and closing of just the first intake valve VA is activated, while the second intake valve VB is kept closed, and then a movement of opening and closing of just the second intake valve VB is activated, while the first intake valve VA is kept closed.

The second important characteristic to be noted is that the hydrogen-supply system is controlled in such a way that, at each operating cycle of each cylinder, no hydrogen is supplied when the first intake valve VA is open in such a way that the flow of air introduced into the cylinder with opening of the first intake valve VA is used, exploiting a movement of swirl of the air flow, to bring about cooling of the cylinder such as to prevent subsequent pre-ignition or backfiring phenomena, whereas, at each operating cycle of the cylinder, hydrogen is supplied by the injector H2 directly into the cylinder only starting from an instant subsequent to closing of the first intake valve and prior to opening of the second intake valve. In Figure 4, the step of activation of the hydrogen injector H2 is represented by the dashed line IH2. In the example illustrated, it is envisaged that the supply of hydrogen will start after closing of the intake valve VA and will stop before opening of the intake valve VB. However, it may be envisaged that the supply of hydrogen, which may be performed with a single injection or with multiple injections, will always start after closing of the intake valve VA, but will stop after opening of the second intake valve VB.

The flow of just fresh air that enters the cylinder during opening of the first intake valve VA produces an effective cooling of the combustion chamber, which results in a regular combustion, without pre-ignition phenomena or backfiring phenomena, thanks to the cooling obtained during opening of the first intake valve.

Figure 4 refers to a particularly preferred example of embodiment in which the first intake valve VA starts to open when the piston in the cylinder is in the proximity of TDC (or is close to TDC, immediately before or immediately after TDC) and is then closed prior to an crank angle of 540°, i.e., when the piston in the cylinder is still moving in the direction of BDC and has not yet reached BDC. The second intake valve VB is, instead, opened after the piston in the cylinder has reached BDC and is already going back up towards TDC (for example, around an crank angle of 560°) and is closed after a further rotation of the crankshaft, for example of approximately 90°.

Once again with reference to Figure 4, it may be noted that the maximum valve lift of the first intake valve VA is approximately 80% of what would be the maximum valve lift of a conventional cycle in which the intake valves VA, VB are opened and closed simultaneously, according to the conventional valve-lift profile LC, whereas the maximum valve lift of the second intake valve VB is approximately 3/8 of the maximum valve lift of the first intake valve VA (or else is approximately 30% of the maximum conventional valve lift according to the profile LC).

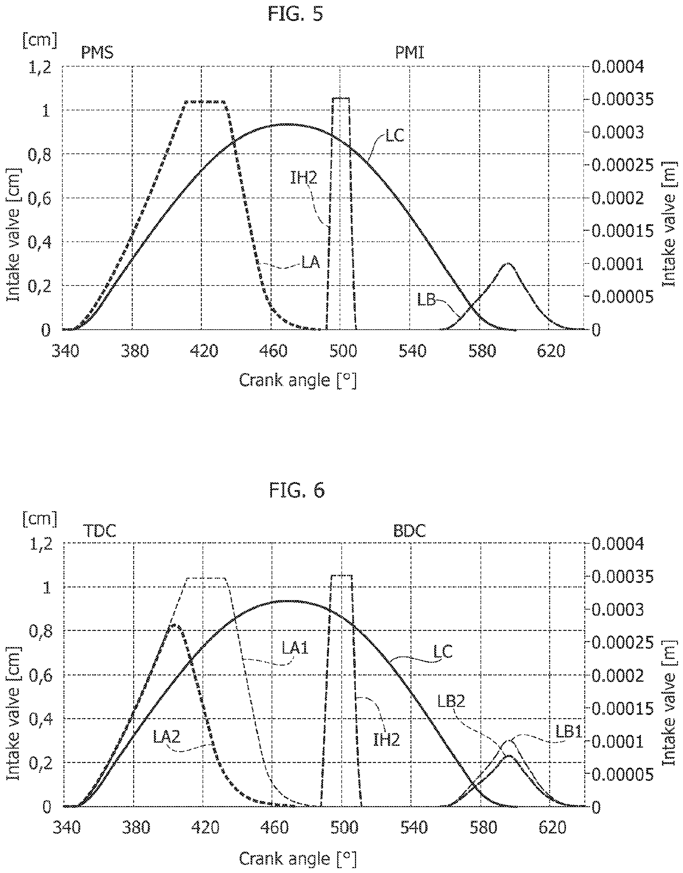

Figures 5 and 6 are diagrams similar to that of Figure 4, which illustrates further examples of embodiment of the invention that differ from the example of Figure 4 as regards the shape of the valve-lift profiles.

All the aforesaid embodiments have in common the fact that, during the stage of intake into the cylinder, there is a first period in which only the first intake valve VA is substantially open, while the second intake valve VB is kept closed, whereas in a second period only the second intake valve VB is open, while the first intake valve VA remains closed.

Irrespective of the phasing of the opening and closing cycles of the two intake valves, the aforesaid characteristic enables the advantage to be obtained of an increase in the turbulent kinetic energy (TKE) in the charge of air introduced into the cylinder. This result is linked to the arrangement of the intake ducts in directions set at a distance from the axis of the cylinder. Consequently, when into the cylinder air is introduced coming only from the intake duct 3A, the flow of air introduced gives rise to a fluid-dynamic field with a component of swirl (flow rotating about the axis C1 of the cylinder). When then the first intake valve VA is closed and the second intake valve VB is opened, the flow coming from the other intake duct 3B interferes with the fluid-dynamic field induced previously, increasing the TKE thereof. The increase in turbulent kinetic energy in the cylinder results in an increase in the speed of propagation of combustion once the mixture of air and fuel explodes (following upon ignition by the spark plug in the case of a petrol-fuelled engine or following upon compression in the cylinder in the case of a diesel engine).

The aforesaid advantage of increase in TKE in the flow of air introduced into the cylinder multiplies in the case of the embodiments of Figures 4, 5, and 6. In this case, in fact, when the first intake valve VA is closed, the piston in the cylinder continues to drop in the direction of BDC, setting up a negative pressure in the cylinder. In the case of these embodiments, the second intake valve opens after BDC, i.e., when the piston is already going back up towards TDC. Notwithstanding this, the negative-pressure field set up previously in the cylinder means that also in this step opening of the second intake valve VB will bring about an energetic entry of air into the cylinder from the second intake duct 3B, with creation of a high TKE in the fluid-dynamic field inside the cylinder.

As already referred to above, the invention may be implemented both with an internal-combustion engine having a device for actuation of the intake valves of a conventional type, where the valve-lift profiles of the two intake valves are predefined and fixed, and in internal-combustion engines equipped with systems for variable actuation of the intake valves.

Thus, for example, with reference to Figure 6, the cam 6A that brings about opening and closing of the first intake valve VA can be controled by a device, for example, an electro-hydraulic device, in such a way as to have a profile such as to determine the valve-lift profile denoted by LA1. In fact, thanks to decoupling of the motion of the cam from the motion of the intake valve by a hydraulic means, it is possible to have a non-monotonic law of motion of the intake valve. However, the variable-actuation system itself may be used for varying the lift profile of the valve VA, for example according to the profile LA2. Likewise, the actuation device, combined with the cam 6B, can generate a law of motion according to the valve-lift profile LB1 illustrated in Figure 6. However, the engine may be equipped with a variable-actuation system that enables an effective lift of the valve VB to be obtained according to the profile LB2.

In an example, the invention is applied to an internal-combustion engine equipped with a system for variable actuation of the engine intake valves of the type developed by the present applicant and marketed under the trademark MultiAir.

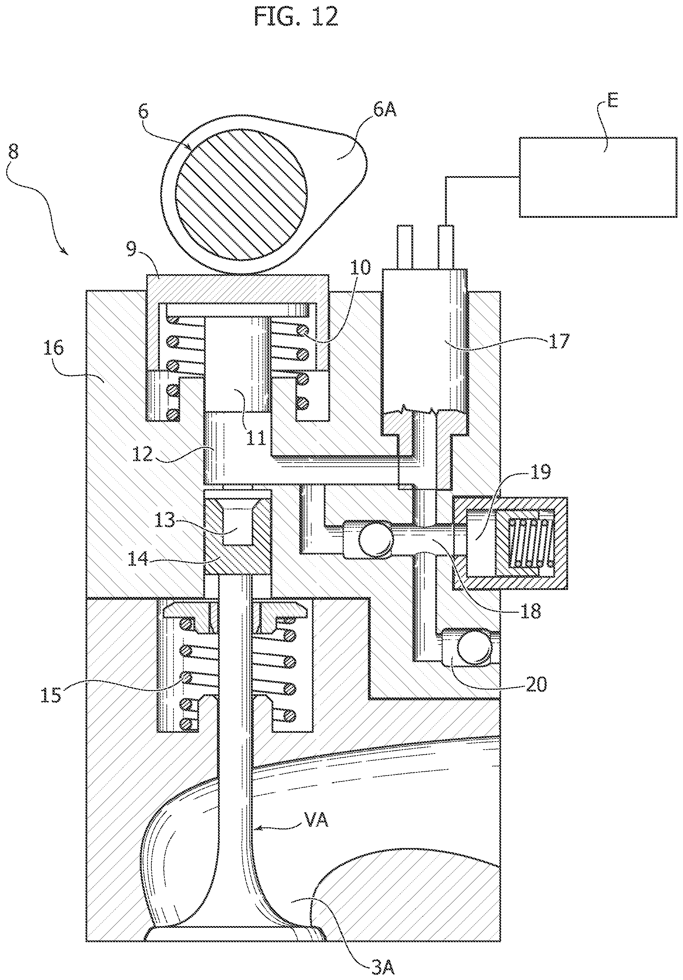

Figure 12 is a schematic illustration of an example of the MultiAir variable-actuation system. In this case, each of the intake valves VA, VB (Figure 12 shows the device associated to the valve VA) is actuated by the respective cam 6A or 6B by means of an electronically controlled hydraulic device 8. The cam 6 drives a tappet 9 kept in contact with the cam 6 by a return spring 10. The tappet 9 is associated to the pumping plunger 11 of a master cylinder, which transfers fluid under pressure of one chamber 12 to the chamber of a slave cylinder 13, the plunger of which 14 functions as actuator of the intake valve VA. The intake valve VA is recalled by a spring 15 towards a position of closing of the intake duct 3A. All the aforesaid components are carried by the structure 16 of the cylinder head of the engine. A solenoid valve 17 is controlled by an electronic control unit E. When the solenoid valve is in a closing condition, it interrupts communication between the pressurized-fluid chamber 12 and a low-pressure environment 18, which communicates with a fluid accumulator 19 and with an inlet 20 that is to be in communication with the lubrication circuit of the engine. If the solenoid valve 17 is in the closed condition, the pressurized-fluid chamber 12 is isolated so that the movements of the tappet 9 imparted by the cam 6 can be transferred, via the fluid in the chamber 12 and the slave cylinder 13, to the intake valve VA. In a condition where the cam 6 is keeping the intake valve VA open, an opening of the solenoid valve 17 controled by the electronic control unit E brings about exhaustion of the pressurized-fluid chamber 12 and consequent closing of the intake valve VA as a result of the return spring 15. In this condition, the intake valve VA is insensitive to the movements of the tappet 9 imparted by the cam 6.

The present description is provided herein purely by way of indication of the basic operating principle of the MultiAir system. The present applicant has developed various embodiments of the aforesaid system that have formed the subject of various patent publications, amongst which the ones already mentioned above.

It is understood that the invention could also be used in combination with systems for variable actuation of the intake valves of any known type, such as electromagnetic actuation systems, or else variable-actuation systems, for example of the type comprising multi-profile cams.

In the case where a variable-actuation system is adopted, it is possible for the operating mode described above, with an actuation at successive times first of just the first intake valve and then of just the second intake valve, will to be implemented only in given engine operating conditions, whereas, in other engine operating conditions, the two intake valves of each cylinder are controlled in a conventional way, getting them to open and close simultaneously.

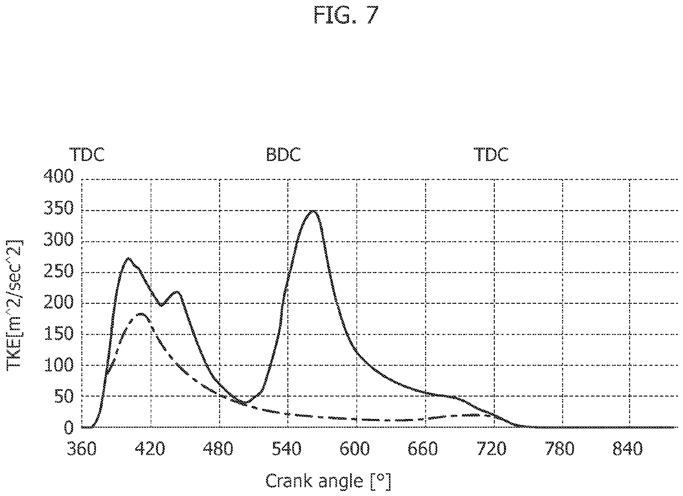

Figures 7 to 11 show the main benefit that may be obtained with the invention as compared to a conventional standard embodiment in which both of the intake valves open at TDC and close at BDC.

Figure 7 is a diagram that shows the variation of the mean value of the turbulent kinetic energy (TKE) in the combustion chamber in the case of standard embodiment and in the case of the invention. The diagram of Figure 7 shows how the delayed opening of the second intake valve will generate a new increase in the turbulent kinetic energy in the proximity of BDC, in such a way that, even though the TKE dissipates, at the subsequent TDC the value of TKE will be considerably higher than in the standard case. This higher TKE makes it possible both to guarantee a perfect mixing of the fuel with the air and to support combustion in the case of ultra-lean mixtures.

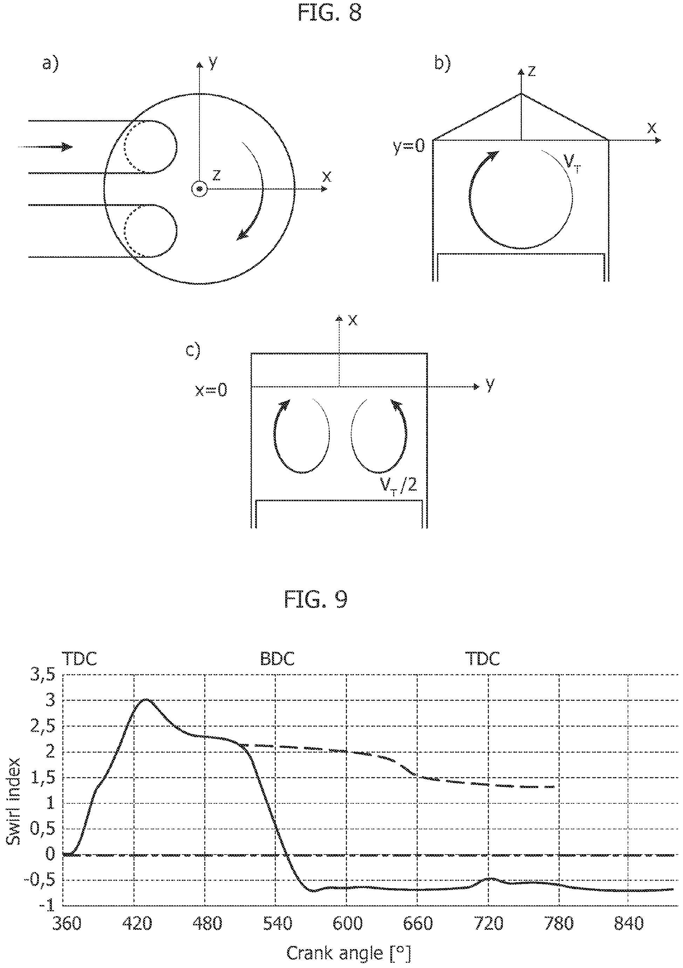

Figures 8a, 8b, and 8c are schematic illustrations of the various organized macro-motions that take place in the combustion chamber. The above figures show a reference system in which the axis X lies in the plane of symmetry of the ducts of the intake valves and is concordant with introduction of the air into the combustion chamber. Hence, defined as "tumble motion" is the motion that lies in the planes normal to the unit vector Y; defined as "cross-tumble motion" is the motion that lies in the planes normal to the unit vector X; defined as "swirl motion" is the motion that lies in the planes normal to the unit vector Z. The so-called indices of tumble, cross-tumble, and swirl are defined as follows:

$$\text{Tumble index} = \omega_{Tumble}/\omega_{Engine}$$

$$\text{Cross-tumble index} = \omega_{CrossTumble}/\omega_{Engine}$$

$$\text{Swirl index} = \omega_{Swirl}/\omega_{Engine}$$

where $\omega_{Engine}$ is the speed of rotation of the engine, $\omega_{Tumble}$, $\omega_{CrossTumble}$ and $\omega_{Swirl}$ are the mean angular speeds of the respective motions, measured in radians per second.

Figure 9 shows the effect of opening of the second intake valve on the swirl generated by the previous cycle of opening of the first intake valve: the dashed line refers to the plot that the swirl index would present in the case where, after the movement of opening of the first intake valve, no opening of the second intake valve took place. It may be noted how the intensity of the swirl would be considerable also during combustion, with increase in thermal exchanges and worsening of the efficiency of the engine. For an engine with direct fuel injection, in particular with the injector in a central position, the further and most important disadvantage of a field of motion prevalently of a swirl type consists in the impossibility of guaranteeing a homogeneous air/fuel mixture. The solid line shows the advantages of the invention for swirl: as soon as opening of the second intake valve starts, the swirl is reduced in a way proportional to the air introduced during opening of the second intake valve. It may be inferred that, having available a device for actuation the intake valves capable of varying the profile of the movement of opening of the second intake valve, it is possible to modulate the intensity of the swirl present in the chamber during combustion. In this way, two effects are obtained:

1. the homogeneity of the air/fuel charge is favoured thanks to the reversal and/or attenuation of the swirl; and

2. a reduced swirl reduces the thermal exchanges during the combustion stage with increase in efficiency.

The dashed-and-dotted line refers to the standard embodiment that obviously does not envisage formation of swirl.

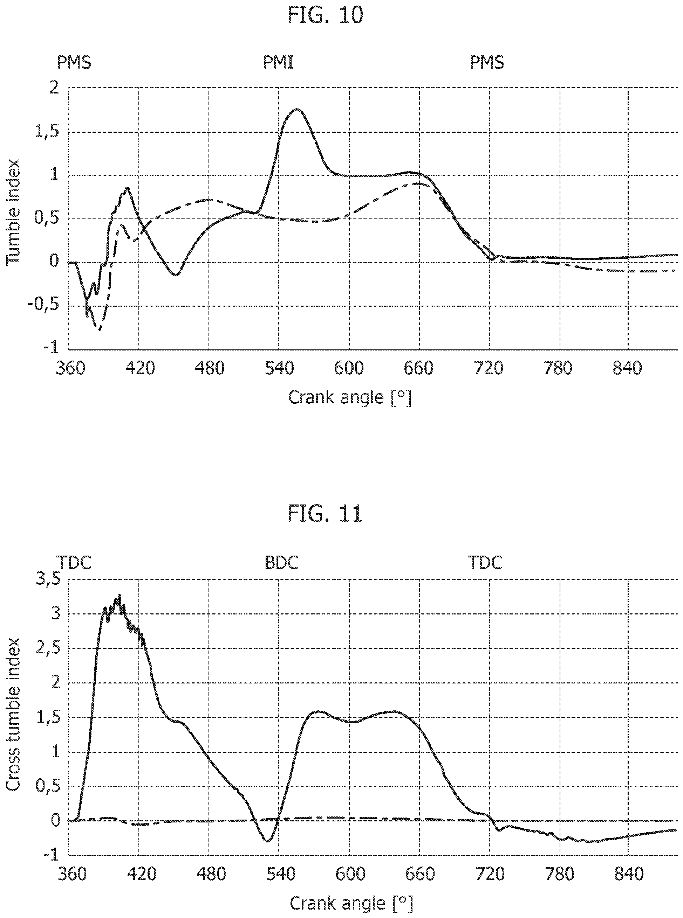

Figure 10 shows the effect of opening of the second intake valve on the tumble generated by the previous cycle of opening of the first intake valve: it should be noted that, at start of opening of the second intake valve (which, in this example, takes place at an crank angle of 500°), there is a considerable increase in the tumble index, in the face of a sudden reduction in the swirl index (visible in Figure 9). In a way similar to the standard case, starting from the crank angle of 660°, on account of the motion of the piston that compresses tumble, the tumble index vanishes, with associated conversion of the kinetic energy into turbulent kinetic energy: as shown also in Figure 7, from an crank angle of 660° to an crank angle of 700° there is no further dissipation of TKE in so far as what is dissipated is replaced by what is generated by vanishment of the tumble. Conversion from swirl to tumble subsequent to fuel injection, which takes place after closing of the first valve, favours the homogeneity of the air/fuel charge, with enormous benefits as regards NOx emissions and irregular combustion.

Figure 11 shows the plot of the cross-tumble index: as with swirl (Figure 9), this motion is not present in the case of standard actuation. And as in the case of the tumble motion (Figure 10), the cross-tumble motion is quickened upon opening of the second intake valve subsequent to the movement of opening of the first intake valve, on account of the conversion of the motion of swirl. As in the case of tumble motion, there are two main advantages:

1. the cross-tumble motion contributes to sustaining the TKE in the range of crank angle between 660° and 700°; and
2. in combination with the tumble motion, the high cross-tumble motion, which is not present in the case of standard actuation, favours homogeneous mixing of the fuel injected with the air present in the cylinder.

In conclusion, it may be understood how the modularity of swirl has an effect on the other organized motions: it is thus possible to optimize the need for initial cooling of the combustion chamber, for an optimal air/fuel mixing, and for a high value of TKE at TDC by varying the parameters that define the two successive actuations of the first intake valve and the second intake valve.

In an embodiment, the first and second intake ducts are sized in such a way that, at high engine loads, closing of the first intake valve generates a pressure wave that climbs up the first intake duct and passes from the common intake manifold into the second intake duct so as to maximize filling of the cylinder.

In a further example, the first and second intake ducts have different diameters and different lengths, chosen in such a way that, in conditions of maximum filling of the engine and full opening of the second intake valve, the flow of air entering the combustion chamber with opening of the second intake valve does not eliminate the motion of swirl of the flow of air previously introduced into the combustion chamber with opening of the first intake valve.

In a further example, the device for actuation of said first intake valve and said second intake valve is configured to control a valve lift of the first intake valve considerably smaller than the valve lift of the second intake valve in such a way that filling of the cylinder is obtained mainly thanks to opening of the second intake valve.

In the engine according to the invention, the aforesaid advantages add to the advantage regarding reduction in the risk of backfiring, reduction in NOx emissions, and reduction in the risk of pre-ignition and knocking, which would otherwise occur on account of fuelling with hydrogen.

It should be noted that, as already mentioned above, closing of the first intake valve occurs when the piston has not yet reached BDC, in particular when the piston is in the proximity of half of its intake stroke, so that the subsequent movement of the piston creates a negative pressure in the cylinder that favours entry of the flow from the second intake duct when the second intake valve is opened. The longer the delay of opening of the second intake valve VB with respect to closing of the first intake valve VA and the greater the negative pressure that is created in the cylinder following upon movement of the piston after closing of the first intake valve VA, the greater the flow generated with opening of the second intake valve VB. A greater flow corresponds to a higher momentum and to a higher turbulent kinetic energy, which is favourable to proper air/fuel mixing.

In the case of a device for variable actuation of the intake valves, it is possible to regulate the degree of opening of the second intake valve VB in order to modulate the intensity of the motion of swirl in the combustion chamber following upon opening of the second intake valve. Modulation of the motion of swirl has significant repercussions on the other components of the motion of the flow in the combustion chamber (tumble and cross-tumble) and also on the instantaneous generation of turbulent kinetic energy, which in turn produces an increase in the combustion rate.

Consequently, the optimal value of the intensity of swirl, which may be modulated by regulating the valve-lift profile of the second intake valve, depends upon various factors, in particular: upon the system of gas-fuel injection (PFI or DI) and, in the case of direct injection (DI), upon the position of the injector in the combustion chamber (lateral or central), upon the crank angle at which gas-fuel injection starts and at which gas-fuel injection terminates; and upon the engine load and the type of desired combustion, whether stratified or with homogeneous charge.

The marked swirl that occurs in the cylinder following upon opening of the first intake valve has an effect of drastic cooling of the hot spots of the combustion chamber.

In the case of use of a device for variable actuation of the intake valves, the advantage is obtained that the valve-lift profile of each valve may be quasi-rectangular, with a particularly high speed of closing of the valve, which is particularly important in order to obtain the advantages of the present invention.

Of course, without prejudice to the principle of the invention, the embodiments and the details of construction may vary widely with respect to what has been described and illustrated herein purely by way of example, without thereby departing from the scope of the present invention, as defined in the annexed claims.

**Claims**

1.  An internal-combustion engine supplied with gaseous fuel, in particular hydrogen, comprising one or more cylinders (1) and respective pistons that slide in the cylinders between a TDC and a BDC and operatively connected to a crankshaft, said engine being configured to actuate successive stages of intake, compression, expansion, and exhaust during each operating cycle in each cylinder,

    wherein the engine includes, for each cylinder:

    - a first intake duct (3A) and a second intake duct (3B) opening into the cylinder and both communicating with a same intake manifold (30) so as to receive air at a same pressure;
    - a first intake valve (VA) and a second intake valve (VB) associated to the cylinder (1) for controlling entry into the cylinder of a flow of intake air, respectively from the first intake duct (3A) and from the second intake duct (3B) during each operating cycle of the cylinder;
    - an actuation device (6) for actuating said first intake valve (VA) and said second intake valve (VB), to control, during each operating cycle of the cylinder, a movement of opening and subsequent closing of said first intake valve (VA) and said second intake valve (VB); and
    - a system for supplying gaseous fuel comprising at least one gaseous fuel injector (H2) associated to each cylinder, and configured and arranged for injecting gaseous fuel directly into the respective cylinder, during each operating cycle of the cylinder,

    wherein:

    - said actuation device for actuation of said first intake valve (VA) and said second intake valve (VB) is configured to control, in each operating cycle of the cylinder, at least in some engine operating conditions, firstly an opening movement and a subsequent closing movement only of said first intake valve (VA), while the second intake valve (VB) remains closed, and then an opening movement and a subsequent closing movement only of said second intake valve (VB), while the first intake valve (VA) remains closed; and
    - said system for supplying gaseous fuel is configured in such a way that:
    - in each operating cycle of each cylinder (1), no gaseous fuel is supplied when the first intake valve (VA) is open, so that the flow of air introduced into the cylinder with the opening of the first intake valve (VA) causes a cooling of the cylinder. so that subsequent pre-ignition or backfiring phenomena are prevented, whereas
    - in each operating cycle of the cylinder (1) gaseous fuel is supplied directly into the cylinder, starting from an instant subsequent to closing of the first intake valve (VA), without pre-ignition phenomena or backfiring phenomena, thanks to the cooling obtained during opening of the first intake valve (VA), and

    wherein the median point of the opening phase of the first intake valve (VA) lies in the first half of the intake stroke of the piston from TDC to BDC, whereas the median point of the opening phase of the second intake valve (VB) lies in the compression stroke of the piston from BDC to TDC.

2.  The internal-combustion engine according to claim 1, **characterized in that** the system for supplying gaseous fuel is configured for completing supply of gaseous fuel, during each operating cycle of the cylinder, before the second intake valve (VB) is opened.

3.  The internal-combustion engine according to claim 1, **characterized in that** the system for supply of gaseous fuel is configured for completing supply of gaseous fuel, during each operating cycle of the cylinder, after the second intake valve (VB) has been opened.

4. The internal-combustion engine according to claim 1, **characterized in that** it comprises a device for variable actuation (8) of the first intake valve (VA) and of the second intake valve (VB) and **in that** said variable-actuation device (8) is configured to obtain, in different engine operating conditions, a first operating mode with openings at successive times firstly of only the first intake valve (VA) and then of only the second intake valve (VB), or a second operating mode with opening of the first intake valve (VA) and of the second intake valve (VB) at identical crank angles or crank angles relatively close to one another and closing of the first intake valve (VA) and of the second intake valve (VB) at identical crank angles or crank angles relatively close to one another, or else a third operating mode, with opening and closing only of said second intake valve (VB).

5. The internal-combustion engine according to claim 4, **characterized in that** the aforesaid first operating mode is implemented when the engine operates at loads higher than a pre-set threshold value.

6. The internal-combustion engine according to claim 4, wherein the device for variable actuation of the first intake valve (VA) and of the second intake valve (VB) is an electronically controlled hydraulic actuation device (8) or a device with electromagnetic or electro-pneumatic actuators or a device including actuation cams having different profiles that are selectively activatable.

7. The internal-combustion engine according to claim 1, **characterized in that** the system for supply of gaseous fuel is configured for completing supply of gaseous fuel, during each operating cycle of the cylinder, before the second intake valve (VB) is closed.

8. The internal-combustion engine according to claim 1, **characterized in that** the gas-fuel injector (H2) is set in a coaxial position with respect to the cylinder (1).

9. The internal-combustion engine according to claim 4, **characterized in that** the aforesaid first operating mode is implemented when the engine operates with ultra-lean mixtures, i.e., with a value of the ratio between the air/fuel ratio and the stoichiometric ratio higher than a threshold of 1.8.

10. A method for controlling operation of an internal-combustion engine that comprises one or more cylinders (1) and respective pistons that slide in the cylinders between a TDC and a BDC and are operatively connected to a crankshaft, wherein, during each operating cycle in each cylinder, successive stages of intake, compression, expansion, and exhaust are provided,

wherein the engine comprises, for each cylinder:

- a first intake duct (3A) and a second intake duct (3B) opening into the cylinder and both communicating with a same intake manifold (30) , so as to receive air at a same pressure;
- a first intake valve (VA) and a second intake valve (VB) associated to the cylinder (1) for controlling entering into the cylinder of a flow of air, respectively from the first intake duct (3A) and the second intake duct (3B), during each operating cycle of the cylinder;
- an actuation device (6) for actuating said first intake valve (VA) and said second intake valve (VB) to control, during each operating cycle of the cylinder, an opening movement and a subsequent closing movement of said first intake valve (VA) and said second intake valve (VB); and
- a system for supplying gaseous fuel, comprising at least one gaseous fuel injector (H2) associated to each cylinder and configured and arranged for injecting gaseous fuel directly into the respective cylinder during each operating cycle of the cylinder,

said method comprising:

- controlling, through said actuation device for actuating said first intake valve (VA) and said second intake valve (VB) during each operating cycle of the cylinder, at least in some engine operating conditions, firstly an opening movement and a subsequent closing movement only of said first intake valve (VA), while the second intake valve (VB) remains closed, and then an opening movement and a subsequent closing movement only of said second intake valve (VB), while the first intake valve (VA) remains closed; and
- controlling said system for supplying gaseous fuel in such a way that:
- in each operating cycle of each cylinder, no gaseous fuel is supplied when the first intake valve is open, so that the flow of air introduced into the cylinder with the opening of the first intake valve (VA) causes a cooling of the cylinder (1) such as to prevent subsequent pre-ignition or backfiring phenomena, whereas

- in each operating cycle of the cylinder (1), gaseous fuel is supplied directly into the cylinder starting from an instant subsequent to closing of the first intake valve (VA) so that a regular combustion is obtained, without pre-ignition phenomena or backfiring phenomena, thanks to the cooling obtained during opening of the first intake valve (VA), and

wherein the median point of the opening phase of the first intake valve (VA) lies in the first half of the intake stroke of the piston from TDC to BDC, whereas the median point of the opening phase of the second intake valve (VB) lies in the compression stroke of the piston from BDC to TDC.

11. The method according to claim 10, **characterized in that** the system for supplying gaseous fuel is configured for completing supply of gaseous fuel, during each operating cycle of the cylinder, before the second intake valve (VB) is opened.

12. The method according to claim 10, **characterized in that** the system for supplying gaseous fuel is configured for starting supply of gaseous fuel, during each operating cycle of the cylinder, after the second intake valve (VB) is opened.

13. The method according to claim 10, **characterized in that** the system for supplying gaseous fuel is configured for completing supply of gaseous fuel, during each operating cycle of the cylinder, after the second intake valve (VB) has been opened.

14. The method according to claim 10, **characterized in that** it comprises a device for variable actuation of the first intake valve (VA) and of the second intake valve (VB) and **in that**, in different engine operating conditions, through the variable-actuation device, a first operating mode is activated, with openings at successive times firstly of only the first intake valve (VA) and then of only the second intake valve (VB), or a second operating mode, with opening of the first intake valve (VA) and of the second intake valve (VB) at crank angles that are identical or relatively close to one another and closing of the first intake valve (VA) and of the second intake valve (VB) at crank angles that are identical or relatively close to one another, or else a third operating mode, with opening and closing only of said second intake valve (VB).

## Patentansprüche

1. Ein mit gasförmigem Kraftstoff, insbesondere Wasserstoff, versorgter Verbrennungsmotor, umfassend einen oder mehrere Zylinder (1) und jeweilige Kolben, die in den Zylindern zwischen einem OT und einem UT gleiten und betriebsmäßig mit einer Kurbelwelle verbunden sind, wobei besagter Motor zum Betätigen aufeinanderfolgender Stufen von Ansaugen, Verdichten, Expansion und Ausstoß während jedes Betriebszyklus in jedem Zylinder eingerichtet ist,

wobei der Motor für jeden Zylinder umfasst:

- einen ersten Ansaugkanal (3A) und einen zweiten Ansaugkanal (3B), die in den Zylinder münden und beide mit einem gleichen Ansaugkrümmer (30) in Verbindung stehen, um Luft mit gleichem Druck zu erhalten;
- ein erstes Einlassventil (VA) und ein zweites Einlassventil (VB), die dem Zylinder (1) zugeordnet sind, um den Eintritt eines Ansaugluftstroms in den Zylinder, jeweils aus dem ersten Ansaugkanal (3A) und aus dem zweiten Ansaugkanal (3B) während jedes Betriebszyklus des Zylinders, zu steuern;
- eine Betätigungseinrichtung (6) zum Betätigen besagten ersten Einlassventils (VA) und besagten zweiten Einlassventils (VB), um während jedes Betriebszyklus des Zylinders eine Öffnungsbewegung und anschließende Schließbewegung besagten ersten Einlassventils (VA) und besagten zweiten Einlassventils (VB) zu steuern; und
- ein System zur Versorgung mit gasförmigem Kraftstoff, umfassend mindestens einen Einspritzer (H2) für gasförmigen Kraftstoff, der jedem Zylinder zugeordnet ist, und eingerichtet und angeordnet, um gasförmigen Kraftstoff direkt in den jeweiligen Zylinder während jedes Betriebszyklus des Zylinders einzuspritzen,

wobei:

- besagte Betätigungseinrichtung zur Betätigung besagten ersten Einlassventils (VA) und besagten zweiten Einlassventils (VB) eingerichtet ist, um in jedem Betriebszyklus des Zylinders, zumindest in einigen Motor-Betriebsbedingungen, erstens eine Öffnungsbewegung und eine anschließende Schließbewegung nur besagten ersten Einlassventils (VA) zu steuern, während das zweite Einlassventil (VB) geschlossen bleibt, und dann eine Öffnungsbewegung und eine anschließende Schließbewegung nur besagten zweiten Einlassventils (VB), während das erste Einlassventil (VA) geschlossen bleibt; und

- besagtes System zur Versorgung mit gasförmigem Kraftstoff derart eingerichtet ist, dass:

- in jedem Betriebszyklus jedes Zylinders (1) kein gasförmiger Kraftstoff zugeführt wird, wenn das erste Einlassventil (VA) geöffnet ist, so dass der mit der Öffnung des ersten Einlassventils (VA) in den Zylinder eingeführte Luftstrom eine Kühlung des Zylinders bewirkt, so dass nachfolgende Vorzündungs- oder Rückzündungsphänomene verhindert werden, wohingegen

- in jedem Betriebszyklus des Zylinders (1) gasförmiger Kraftstoff direkt in den Zylinder zugeführt wird, beginnend von einem Zeitpunkt nach dem Schließen des ersten Einlassventils (VA), ohne Vorzündungsphänomene oder Rückzündungsphänomene, dank der während der Öffnung des ersten Einlassventils (VA) erhaltenen Kühlung, und

wobei der Medianpunkt der Öffnungsphase des ersten Einlassventils (VA) in der ersten Hälfte des Ansaugtakts des Kolbens von OT zu UT liegt, wohingegen der Medianpunkt der Öffnungsphase des zweiten Einlassventils (VB) im Verdichtungstakt des Kolbens von UT zu OT liegt.

2. Der Verbrennungsmotor nach Anspruch 1, **dadurch gekennzeichnet, dass** das System zur Versorgung mit gasförmigem Kraftstoff eingerichtet ist, um die Zufuhr von gasförmigem Kraftstoff während jedes Betriebszyklus des Zylinders abzuschließen, bevor das zweite Einlassventil (VB) geöffnet wird.

3. Der Verbrennungsmotor nach Anspruch 1, **dadurch gekennzeichnet, dass** das System zur Versorgung mit gasförmigem Kraftstoff eingerichtet ist, um die Zufuhr von gasförmigem Kraftstoff während jedes Betriebszyklus des Zylinders abzuschließen, nachdem das zweite Einlassventil (VB) geöffnet wurde.

4. Der Verbrennungsmotor nach Anspruch 1, **dadurch gekennzeichnet, dass** er eine Einrichtung zur variablen Betätigung (8) des ersten Einlassventils (VA) und des zweiten Einlassventils (VB) umfasst und dass besagte Einrichtung zur variablen Betätigung (8) eingerichtet ist, um in verschiedenen Motor-Betriebsbedingungen einen ersten Betriebsmodus mit Öffnungen zu aufeinanderfolgenden Zeitpunkten erst nur des ersten Einlassventils (VA) und dann nur des zweiten Einlassventils (VB) zu erhalten, oder einen zweiten Betriebsmodus mit Öffnung des ersten Einlassventils (VA) und des zweiten Einlassventils (VB) bei identischen Kurbelwinkeln oder relativ nahe beieinander liegenden Kurbelwinkeln und Schließung des ersten Einlassventils (VA) und des zweiten Einlassventils (VB) bei identischen Kurbelwinkeln oder relativ nahe beieinander liegenden Kurbelwinkeln, oder einen dritten Betriebsmodus mit Öffnung und Schließung nur besagten zweiten Einlassventils (VB).

5. Der Verbrennungsmotor nach Anspruch 4, **dadurch gekennzeichnet, dass** der vorgenannte erste Betriebsmodus implementiert wird, wenn der Motor mit Lasten oberhalb eines voreingestellten Schwellenwerts arbeitet.

6. Der Verbrennungsmotor nach Anspruch 4, wobei die Einrichtung zur variablen Betätigung des ersten Einlassventils (VA) und des zweiten Einlassventils (VB) eine elektronisch gesteuerte hydraulische Betätigungseinrichtung (8) oder eine Einrichtung mit elektromagnetischen oder elektropneumatischen Stellgliedern oder eine Einrichtung einschließlich Betätigungsnocken mit unterschiedlichen, selektiv aktivierbaren Profilen ist.

7. Der Verbrennungsmotor nach Anspruch 1, **dadurch gekennzeichnet, dass** das System zur Versorgung mit gasförmigem Kraftstoff eingerichtet ist, um die Zufuhr von gasförmigem Kraftstoff während jedes Betriebszyklus des Zylinders abzuschließen, bevor das zweite Einlassventil (VB) geschlossen wird.

8. Der Verbrennungsmotor nach Anspruch 1, **dadurch gekennzeichnet, dass** der Gaskraftstoff-Einspritzer (H2) in einer koaxialen Position bezüglich des Zylinders (1) angeordnet ist.

9. Der Verbrennungsmotor nach Anspruch 4, **dadurch gekennzeichnet, dass** der vorgenannte erste Betriebsmodus implementiert wird, wenn der Motor mit ultra-mageren Gemischen arbeitet, d.h. mit einem Wert des Verhältnisses zwischen dem Luft/Kraftstoff-Verhältnis und dem stöchiometrischen Verhältnis oberhalb einer Schwelle von 1,8.

10. Ein Verfahren zum Steuern des Betriebs eines Verbrennungsmotors, der einen oder mehrere Zylinder (1) und jeweilige Kolben umfasst, die in den Zylindern zwischen einem OT und einem UT gleiten und betriebsmäßig mit einer Kurbelwelle verbunden sind, wobei während jedes Betriebszyklus in jedem Zylinder aufeinanderfolgende Stufen von Ansaugen, Verdichten, Expansion und Ausstoß vorgesehen sind,

wobei der Motor für jeden Zylinder umfasst:

- einen ersten Ansaugkanal (3A) und einen zweiten Ansaugkanal (3B), die in den Zylinder münden und beide mit einem gleichen Ansaugkrümmer (30) in Verbindung stehen, um Luft mit gleichem Druck zu erhalten;
- ein erstes Einlassventil (VA) und ein zweites Einlassventil (VB), die dem Zylinder (1) zugeordnet sind, um den Eintritt eines Luftstroms in den Zylinder, jeweils aus dem ersten Ansaugkanal (3A) und dem zweiten Ansaugkanal (3B), während jedes Betriebszyklus des Zylinders, zu steuern;
- eine Betätigungseinrichtung (6) zum Betätigen besagten ersten Einlassventils (VA) und besagten zweiten Einlassventils (VB), um während jedes Betriebszyklus des Zylinders eine Öffnungsbewegung und eine anschließende Schließbewegung besagten ersten Einlassventils (VA) und besagten zweiten Einlassventils (VB) zu steuern; und
- ein System zur Versorgung mit gasförmigem Kraftstoff, umfassend mindestens einen Einspritzer (H2) für gasförmigen Kraftstoff, der jedem Zylinder zugeordnet ist und eingerichtet und angeordnet ist, um gasförmigen Kraftstoff direkt in den jeweiligen Zylinder während jedes Betriebszyklus des Zylinders einzuspritzen,

wobei besagtes Verfahren umfasst:

- Steuern, durch besagte Betätigungseinrichtung zum Betätigen besagten ersten Einlassventils (VA) und besagten zweiten Einlassventils (VB) während jedes Betriebszyklus des Zylinders, zumindest in einigen Motor-Betriebsbedingungen, erstens einer Öffnungsbewegung und einer anschließenden Schließbewegung nur besagten ersten Einlassventils (VA), während das zweite Einlassventil (VB) geschlossen bleibt, und dann einer Öffnungsbewegung und einer anschließenden Schließbewegung nur besagten zweiten Einlassventils (VB), während das erste Einlassventil (VA) geschlossen bleibt; und
- Steuern besagten Systems zur Versorgung mit gasförmigem Kraftstoff derart, dass:
- in jedem Betriebszyklus jedes Zylinders kein gasförmiger Kraftstoff zugeführt wird, wenn das erste Einlassventil geöffnet ist, so dass der mit der Öffnung des ersten Einlassventils (VA) in den Zylinder eingeführte Luftstrom eine Kühlung des Zylinders (1) bewirkt, um nachfolgende Vorzündungs- oder Rückzündungsphänomene zu verhindern, wohingegen
- in jedem Betriebszyklus des Zylinders (1) gasförmiger Kraftstoff direkt in den Zylinder zugeführt wird, beginnend von einem Zeitpunkt nach dem Schließen des ersten Einlassventils (VA), so dass eine reguläre Verbrennung erhalten wird, ohne Vorzündungsphänomene oder Rückzündungsphänomene, dank der während der Öffnung des ersten Einlassventils (VA) erhaltenen Kühlung, und

wobei der Medianpunkt der Öffnungsphase des ersten Einlassventils (VA) in der ersten Hälfte des Ansaugtakts des Kolbens von OT zu UT liegt, wohingegen der Medianpunkt der Öffnungsphase des zweiten Einlassventils (VB) im Verdichtungstakt des Kolbens von UT zu OT liegt.

11. Das Verfahren nach Anspruch 10, **dadurch gekennzeichnet, dass** das System zur Versorgung mit gasförmigem Kraftstoff eingerichtet ist, um die Zufuhr von gasförmigem Kraftstoff während jedes Betriebszyklus des Zylinders abzuschließen, bevor das zweite Einlassventil (VB) geöffnet wird.

12. Das Verfahren nach Anspruch 10, **dadurch gekennzeichnet, dass** das System zur Versorgung mit gasförmigem Kraftstoff eingerichtet ist, um die Zufuhr von gasförmigem Kraftstoff während jedes Betriebszyklus des Zylinders zu beginnen, nachdem das zweite Einlassventil (VB) geöffnet wurde.

13. Das Verfahren nach Anspruch 10, **dadurch gekennzeichnet, dass** das System zur Versorgung mit gasförmigem Kraftstoff eingerichtet ist, um die Zufuhr von gasförmigem Kraftstoff während jedes Betriebszyklus des Zylinders abzuschließen, nachdem das zweite Einlassventil (VB) geöffnet wurde.

14. Das Verfahren nach Anspruch 10, **dadurch gekennzeichnet, dass** es eine Einrichtung zur variablen Betätigung des ersten Einlassventils (VA) und des zweiten Einlassventils (VB) umfasst und dass in verschiedenen Motor-Betriebsbedingungen durch die Einrichtung zur variablen Betätigung ein erster Betriebsmodus aktiviert wird, mit Öffnungen zu aufeinanderfolgenden Zeitpunkten erst nur des ersten Einlassventils (VA) und dann nur des zweiten Einlassventils (VB), oder ein zweiter Betriebsmodus, mit Öffnung des ersten Einlassventils (VA) und des zweiten Einlassventils (VB) bei Kurbelwinkeln, die identisch oder relativ nahe beieinander liegen, und Schließung des ersten Einlassventils (VA) und des zweiten Einlassventils (VB) bei Kurbelwinkeln, die identisch oder relativ nahe beieinander liegen, oder ein dritter Betriebsmodus, mit Öffnung und Schließung nur besagten zweiten Einlassventils (VB).

**Revendications**

1. Moteur à combustion interne alimenté en carburant gazeux, en particulier hydrogène, comprenant un ou plusieurs cylindres (1) et des pistons respectifs qui coulissent dans les cylindres entre un PMH et un PMB et sont connectés fonctionnellement à un vilebrequin, ledit moteur étant configuré pour actionner des phases successives d'admission, de compression, de détente et d'échappement pendant chaque cycle de fonctionnement dans chaque cylindre,

   dans lequel le moteur comprend, pour chaque cylindre :

   - un premier conduit d'admission (3A) et un second conduit d'admission (3B) débouchant dans le cylindre et communiquant tous deux avec un même collecteur d'admission (30) de manière à recevoir de l'air à une même pression;
   - une première soupape d'admission (VA) et une seconde soupape d'admission (VB) associées au cylindre (1) pour commander l'entrée dans le cylindre d'un flux d'air d'admission, respectivement depuis le premier conduit d'admission (3A) et depuis le second conduit d'admission (3B) pendant chaque cycle de fonctionnement du cylindre ;
   - un dispositif d'actionnement (6) pour actionner ladite première soupape d'admission (VA) et ladite seconde soupape d'admission (VB), pour commander, pendant chaque cycle de fonctionnement du cylindre, un mouvement d'ouverture et de fermeture subséquente de ladite première soupape d'admission (VA) et de ladite seconde soupape d'admission (VB) ; et
   - un système d'alimentation en carburant gazeux comprenant au moins un injecteur de carburant gazeux (H2) associé à chaque cylindre, et configuré et agencé pour injecter du carburant gazeux directement dans le cylindre respectif, pendant chaque cycle de fonctionnement du cylindre,

   dans lequel :

   - ledit dispositif d'actionnement pour l'actionnement de ladite première soupape d'admission (VA) et de ladite seconde soupape d'admission (VB) est configuré pour commander, dans chaque cycle de fonctionnement du cylindre, au moins dans certaines conditions de fonctionnement du moteur, premièrement un mouvement d'ouverture et un mouvement de fermeture subséquent uniquement de ladite première soupape d'admission (VA), tandis que la seconde soupape d'admission (VB) reste fermée, et ensuite un mouvement d'ouverture et un mouvement de fermeture subséquent uniquement de ladite seconde soupape d'admission (VB), tandis que la première soupape d'admission (VA) reste fermée; et
   - ledit système d'alimentation en carburant gazeux est configuré de telle sorte que :
   - dans chaque cycle de fonctionnement de chaque cylindre (1), aucun carburant gazeux n'est fourni lorsque la première soupape d'admission (VA) est ouverte, de sorte que le flux d'air introduit dans le cylindre avec l'ouverture de la première soupape d'admission (VA) provoque un refroidissement du cylindre, de sorte que des phénomènes ultérieurs de pré-allumage ou de retour de flamme sont empêchés, tandis que
   - dans chaque cycle de fonctionnement du cylindre (1), du carburant gazeux est fourni directement dans le cylindre, à partir d'un instant subséquent à la fermeture de la première soupape d'admission (VA), sans phénomènes de pré-allumage ou de retour de flamme, grâce au refroidissement obtenu pendant l'ouverture de la première soupape d'admission (VA), et

   dans lequel le point médian de la phase d'ouverture de la première soupape d'admission (VA) se situe dans la première moitié de la course d'admission du piston du PMH au PMB, tandis que le point médian de la phase d'ouverture de la seconde soupape d'admission (VB) se situe dans la course de compression du piston du PMB au PMH.

2. Moteur à combustion interne selon la revendication 1, **caractérisé en ce que** le système d'alimentation en carburant gazeux est configuré pour terminer la fourniture de carburant gazeux, pendant chaque cycle de fonctionnement du cylindre, avant que la seconde soupape d'admission (VB) ne soit ouverte.

3. Moteur à combustion interne selon la revendication 1, **caractérisé en ce que** le système d'alimentation en carburant gazeux est configuré pour terminer la fourniture de carburant gazeux, pendant chaque cycle de fonctionnement du cylindre, après que la seconde soupape d'admission (VB) a été ouverte.

4. Moteur à combustion interne selon la revendication 1, **caractérisé en ce qu'**il comprend un dispositif d'actionnement variable (8) de la première soupape d'admission (VA) et de la seconde soupape d'admission (VB) et **en ce que** ledit dispositif d'actionnement variable (8) est configuré pour obtenir, dans différentes conditions de fonctionnement du moteur, un premier mode de fonctionnement avec des ouvertures à des instants successifs premièrement uniquement de la première soupape d'admission (VA) et ensuite uniquement de la seconde soupape d'admission (VB), ou un second mode de fonctionnement avec ouverture de la première soupape d'admission (VA) et de la seconde soupape d'admission (VB) à des angles vilebrequin identiques ou relativement proches les uns des autres et fermeture de la première soupape d'admission (VA) et de la seconde soupape d'admission (VB) à des angles vilebrequin identiques ou relativement proches les uns des autres, ou encore un troisième mode de fonctionnement, avec ouverture et fermeture uniquement de ladite seconde soupape d'admission (VB).

5. Moteur à combustion interne selon la revendication 4, **caractérisé en ce que** ledit premier mode de fonctionnement est mis en œuvre lorsque le moteur fonctionne à des charges supérieures à une valeur seuil prédéfinie.

6. Moteur à combustion interne selon la revendication 4, dans lequel le dispositif d'actionnement variable de la première soupape d'admission (VA) et de la seconde soupape d'admission (VB) est un dispositif d'actionnement hydraulique à commande électronique (8) ou un dispositif avec des actionneurs électromagnétiques ou électropneumatiques ou un dispositif comprenant des cames d'actionnement ayant des profils différents qui sont sélectivement activables.

7. Moteur à combustion interne selon la revendication 1, **caractérisé en ce que** le système d'alimentation en carburant gazeux est configuré pour terminer la fourniture de carburant gazeux, pendant chaque cycle de fonctionnement du cylindre, avant que la seconde soupape d'admission (VB) ne soit fermée.

8. Moteur à combustion interne selon la revendication 1, **caractérisé en ce que** l'injecteur de carburant gazeux (H2) est placé dans une position coaxiale par rapport au cylindre (1).

9. Moteur à combustion interne selon la revendication 4, **caractérisé en ce que** ledit premier mode de fonctionnement est mis en œuvre lorsque le moteur fonctionne avec des mélanges ultra-pauvres, c'est-à-dire avec une valeur du rapport entre le rapport air/carburant et le rapport stoechiométrique supérieure à un seuil de 1,8.

10. Procédé de commande du fonctionnement d'un moteur à combustion interne qui comprend un ou plusieurs cylindres (1) et des pistons respectifs qui coulissent dans les cylindres entre un PMH et un PMB et sont connectés fonctionnellement à un vilebrequin, dans lequel, pendant chaque cycle de fonctionnement dans chaque cylindre, des phases successives d'admission, de compression, de détente et d'échappement sont prévues,

dans lequel le moteur comprend, pour chaque cylindre :

- un premier conduit d'admission (3A) et un second conduit d'admission (3B) débouchant dans le cylindre et communiquant tous deux avec un même collecteur d'admission (30), de manière à recevoir de l'air à une même pression;
- une première soupape d'admission (VA) et une seconde soupape d'admission (VB) associées au cylindre (1) pour commander l'entrée dans le cylindre d'un flux d'air, respectivement depuis le premier conduit d'admission (3A) et le second conduit d'admission (3B), pendant chaque cycle de fonctionnement du cylindre ;
- un dispositif d'actionnement (6) pour actionner ladite première soupape d'admission (VA) et ladite seconde soupape d'admission (VB) pour commander, pendant chaque cycle de fonctionnement du cylindre, un mouvement d'ouverture et un mouvement de fermeture subséquent de ladite première soupape d'admission (VA) et de ladite seconde soupape d'admission (VB) ; et
- un système d'alimentation en carburant gazeux, comprenant au moins un injecteur de carburant gazeux (H2) associé à chaque cylindre et configuré et agencé pour injecter du carburant gazeux directement dans le cylindre respectif pendant chaque cycle de fonctionnement du cylindre,

ledit procédé comprenant :

- commander, par ledit dispositif d'actionnement pour actionner ladite première soupape d'admission (VA) et ladite seconde soupape d'admission (VB) pendant chaque cycle de fonctionnement du cylindre, au moins dans certaines conditions de fonctionnement du moteur, premièrement un mouvement d'ouverture et un mouvement de fermeture subséquent uniquement de ladite première soupape d'admission (VA), tandis que la seconde soupape d'admission (VB) reste fermée, et ensuite un mouvement d'ouverture et un mouvement de fermeture subséquent uniquement de ladite seconde soupape d'admission (VB), tandis que la première soupape d'admission (VA) reste fermée ; et

- commander ledit système d'alimentation en carburant gazeux de telle sorte que :

- dans chaque cycle de fonctionnement de chaque cylindre, aucun carburant gazeux n'est fourni lorsque la première soupape d'admission est ouverte, de sorte que le flux d'air introduit dans le cylindre avec l'ouverture de la première soupape d'admission (VA) provoque un refroidissement du cylindre (1) de manière à empêcher des phénomènes ultérieurs de pré-allumage ou de retour de flamme, tandis que

- dans chaque cycle de fonctionnement du cylindre (1), du carburant gazeux est fourni directement dans le cylindre à partir d'un instant subséquent à la fermeture de la première soupape d'admission (VA) de sorte qu'une combustion régulière est obtenue, sans phénomènes de pré-allumage ou de retour de flamme, grâce au refroidissement obtenu pendant l'ouverture de la première soupape d'admission (VA), et

dans lequel le point médian de la phase d'ouverture de la première soupape d'admission (VA) se situe dans la première moitié de la course d'admission du piston du PMH au PMB, tandis que le point médian de la phase d'ouverture de la seconde soupape d'admission (VB) se situe dans la course de compression du piston du PMB au PMH.

11. Procédé selon la revendication 10, **caractérisé en ce que** le système d'alimentation en carburant gazeux est configuré pour terminer la fourniture de carburant gazeux, pendant chaque cycle de fonctionnement du cylindre, avant que la seconde soupape d'admission (VB) ne soit ouverte.

12. Procédé selon la revendication 10, **caractérisé en ce que** le système d'alimentation en carburant gazeux est configuré pour commencer la fourniture de carburant gazeux, pendant chaque cycle de fonctionnement du cylindre, après que la seconde soupape d'admission (VB) est ouverte.

13. Procédé selon la revendication 10, **caractérisé en ce que** le système d'alimentation en carburant gazeux est configuré pour terminer la fourniture de carburant gazeux, pendant chaque cycle de fonctionnement du cylindre, après que la seconde soupape d'admission (VB) a été ouverte.

14. Procédé selon la revendication 10, **caractérisé en ce qu'**il comprend un dispositif d'actionnement variable de la première soupape d'admission (VA) et de la seconde soupape d'admission (VB) et **en ce que**, dans différentes conditions de fonctionnement du moteur, par le dispositif d'actionnement variable, un premier mode de fonctionnement est activé, avec des ouvertures à des instants successifs premièrement uniquement de la première soupape d'admission (VA) et ensuite uniquement de la seconde soupape d'admission (VB), ou un second mode de fonctionnement, avec ouverture de la première soupape d'admission (VA) et de la seconde soupape d'admission (VB) à des angles vilebrequin qui sont identiques ou relativement proches les uns des autres et fermeture de la première soupape d'admission (VA) et de la seconde soupape d'admission (VB) à des angles vilebrequin qui sont identiques ou relativement proches les uns des autres, ou encore un troisième mode de fonctionnement, avec ouverture et fermeture uniquement de ladite seconde soupape d'admission (VB).

FIG. 1

FIG. 2

FIG. 3

FIG. 3A

FIG. 4

FIG. 5

FIG. 6

# FIG. 7

## FIG. 8

a)

b)

c)

## FIG. 9

FIG. 10

FIG. 11

# FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7980 A
- US 220 B2
- US 2012023935 A1
- US 2012160213 A1